# EUROPÄISCHE PATENTSCHRIFT

(11) **EP 2 023 160 B1**
(45) Veröffentlichungstag und Bekanntmachung des Hinweises auf die Patenterteilung: **07.10.2009**
(21) Anmeldenummer: 07015153.5
(22) Anmeldetag: 02.08.2007
(51) Int. Cl.: G01S 17/02, G05B 19/4061, B25J 19/06, B25J 9/16, F16P 3/14

(54) **Dreidimensionale Raumüberwachung mit Konfigurationsmodus zum Bestimmen der Schutzfelder**
3D room surveillance with configuration mode for determining the protection fields
Surveillance spatiale tridimensionnelle dotée d'un mode de configuration pour la détermination des champs de protection

(43) Veröffentlichungstag der Anmeldung: 11.02.2009
(73) Patentinhaber: SICK AG, 79183 Waldkirch (DE)
(72) Erfinder: Wüstefeld, Martin, 79350 Sexau (DE)
(74) Vertreter: Ludewigt, Christoph

(56) Entgegenhaltungen:
- DE-A1- 10 360 174
- DE-A1-102005 003 254
- DE-A1-102005 011 143
- DE-A1-102005 028 490
- DE-A1-102005 063 217

## Beschreibung

Die Erfindung betrifft eine optoelektronische Vorrichtung zur Absicherung einer oder mehrerer Gefahrenquellen in einem Raumbereich mit einem entfernungsauflösenden Lichtempfänger nach dem Oberbegriff von Anspruch 1 sowie ein entsprechendes Verfahren nach dem Oberbegriff von Anspruch 14.

Zur Überwachung von Bereichen oder Räumen sowie besonders von Gefahrenstellen können kamerabasierte Schutzeinrichtungen eingesetzt werden. Eine besonders genaue Überwachung ist dabei mit dreidimensionalen Kamerasensoren möglich, die auf verschiedenen Verfahren wie Stereoskopie, Triangulation, Laufzeit, der Störung passiver zweidimensionaler Muster, der Auswertung von projizierten Beleuchtungsmuster und weiteren Verfahren basieren können. Ziel der Überwachung ist jeweils die Erkennung eines als kritisch eingestuften Zustandes innerhalb des dreidimensionalen Raumes, der dann zu einer Warnung oder einer Absicherung einer Gefahrenquelle etwa in Form einer sicherheitsgerichteten Abschaltung führt.

In der Sicherheitstechnik wünscht man sich im Rahmen einer vollständig integrierten Mensch-Maschine-Interaktion eine variable, flexible Schutzhülle um sämtliche Gefährdungsquellen, wie etwa bewegte mechanische Teile oder Roboter. Solche dynamischen Schutzfelder erfordern komplexe Bildauswertungen, welche im Betrieb die zulässigen Bewegungen der Maschine von unzulässigen Eingriffen durch Bedienpersonal oder Fehlfunktionen anderer Maschinen zuverlässig unterscheiden können. Derartige Systeme sind für die Praxis noch nicht weit genug ausgereift, um in der Sicherheitstechnik erfolgreich eingesetzt werden zu können. Erkennungsfehler bei der Bildauswertung würden die Gesundheit des Bedienpersonals gefährden oder, wenn man dies sicher vermeiden möchte, durch gehäufte Fehlalarme zu sehr hohen Ausfallzeiten führen. Daher bleibt nur der Ausweg, Schutzfelder vorzukonfigurieren und allein diese Schutzfelder auf unzulässige Objekteingriffe zu überwachen.

Im Bereich zweidimensionaler Überwachungen (etwa sog. "Blanking"-Bereiche bei Lichtgittern) ist bekannt, in einem CAD-ähnlichen Programm Schutzfelder aufzuziehen oder einzugeben. Ähnlich lassen sich auch im Bereich dreidimensionaler Bewachungssensoren in einem CAD-ähnlichen Konfigurationsmenü schutzwallartige dreidimensionale Schutzfelder definieren. Diese Definition der Lage eines Schutzfeldes innerhalb des dreidimensionalen Raumes muss nach der Installation, also vor Ort in der benötigten Anwendung erfolgen. Je komplexer ein Schutzfeld ist, desto schwieriger ist das zu gewährleisten.

Die Bedienung der CAD-Oberfläche erfordert Fachkenntnisse und ist selbst mit diesen Kenntnissen noch sehr zeitaufwändig, wenn komplexe Bewegungsabläufe etwa eines Freiarmroboters berücksichtigt werden müssen. Spätestens wenn diese Bewegungsabläufe auch noch häufig geändert werden müssen, zeigen sich die Unzulänglichkeiten dieses Konfigurationsverfahrens. Um nämlich die umständliche Neudefinition der vorkonfigurierten Schutzfelder zu vermeiden, und um mögliche Fehler bei der Auslegung der Schutzfelder mangels genauer Kenntnisse im Umgang mit dem Sensor auszugleichen, werden in der Praxis die Schutzfelder von vorneherein so ausgewählt, dass alle Varianten berücksichtigt sind und Schutzfelder einen großzügigen Sicherheitspuffer umfassen. Die Schutzfelder sind also größer definiert, als für die Sicherheit des Bedienpersonals erforderlich wäre, und erhöhen somit die Wahrscheinlichkeit eines Eingriffs und damit zusätzliche Ausfallzeiten, die ohne Herabsetzung des Sicherheitsniveaus durch genauere Definition der Schutzfelder hätten vermieden werden können.

Aus der DE 100 26 711 A1 ist ein System zur Überwachung der Position eines Objektes bekannt, an dem visuelle Merkmale befestigt sind, die während des Betriebes überwacht werden. Aufgrund der visuellen Merkmale kann somit die Bewegungsbahn des Objektes verfolgt und mit einer zulässigen Bewegung verglichen werden. Bei Abweichungen kann ein Alarm ausgegeben oder die Anlage sofort ausgeschaltet werden. Dies ist also ein anderer Ansatz als die Konfiguration von Schutzfeldern, und die Gefahrenquelle, hier das Objekt, muss dynamisch während des Betriebs überwacht werden. Das ist rechenintensiv und auch nicht unanfällig gegen Fehler, weil die Auswertungseinheit dynamisch abschätzen muss, ob eine Bewegung eine Sicherheitsgefahr darstellt oder nicht. Im Zweifel wird die Auswertungseinheit ein relativ starres Bewegungsmuster erwarten, jegliche Abweichung als Gefahr einstufen und daher zu verhältnismäßig großen Ausfallzeiten führen

In der US 6,297,844 B1 wird ein dreidimensionaler Lichtvorhang aufgezogen, und innerhalb des Überwachungsbereichs werden Objekte und deren Bahn vorab als Referenz eingelernt, sofern sie keine Sicherheitsfunktion auslösen sollen, und im Betrieb solche Objekte als unzulässig erkannt, deren Bewegung und Positionen von den eingelernten Referenzen abweicht. Auch hier sind also keine Schutzbereiche definiert, sondern der gesamte Raumbereich wird überwacht. Somit sind erneut sehr komplexe Bildauswertungen über den gesamten Sichtbereich erforderlich, die durch eine verhältnismäßig hohe Fehlerrate zu Ausfallzeiten führen.

In der CH 641583 ist ein Gerät zu Raumüberwachung mit Warn- und Schutzzonen offenbart, das auf einem dreidimensionalen Scanner basiert. Dabei werden Reflektoren entlang eines zu überwachenden Flusses aufgestellt und ermöglichen somit, den Flusslauf einzulernen. Danach werden Warn- und Schutzzonen geschaffen, innerhalb derer die Größe, Form, Lage, Geschwindigkeit, Beschleunigung, Richtung und Entfernung eines Störerobjekts festgestellt werden können. Der Begriff Schutzzone gemäß diesem Stand der Technik hat also die gegenteilige Bedeutung wie in der Sicherheitstechnik: es soll nämlich die Zone vor Eindringlingen geschützt werden, statt wie in der Sicherheitstechnik die Unversehrtheit des Eindringlings. Dementsprechend ist das Gerät auch gerade nicht darauf ausgelegt, dass bei einem Eingriff auch im schlechtesten Fall noch genug Zeit zur Verfügung steht, eine Gefahrenquelle für den Eindringling abzusichern, oder dass das Gerät sicher ist.

Stattdessen ist die angestrebte Anwendung, Eindringlinge aufzuhalten oder zu erkennen. Dementsprechend werden auch keine Schutzzonen um den eingelernten Verlauf herum gelegt, sondern dieser Verlauf bildet selber die Grenze der Schutzzone, wobei weitere Zonen lediglich in konstanten Abstand hierzu vorgesehen sind. Die Gefahrenquelle ist als hier nicht das vermessene Objekt, etwa der Flusslauf, sondern der erst im Betrieb erscheinende Eindringling. Die vermessene Konfiguration ist nach diesem Stand der Technik eine Grenze, bei deren Überschreitung drastische Maßnahmen wie das Auslösen automatischer Schusswaffen ergriffen werden können, während bei Durchbrechen der vorgelagerten Randzonen zunächst ein Alarm oder ein Scheinwerfer ausgelöst werden. Über eine sinnvolle und effiziente Einteilung oder Konfiguration eines Raumbereichs in Schutzfelder zur Absicherung von Gefahrenquellen und dem Erhalt der Gesundheit von Bedienpersonal trägt dieser Ansatz demnach nichts bei.

Die DE 10 2005 011 143 A1 beschreibt eine kamerabasierte Sicherungsvorrichtung zur Überwachung von Sicherheitsbereichen an einem Roboter oder einer Werkzeugmaschine. Dabei werden Im Betrieb Steuerungsdaten des Roboters oder der Werkzeugmaschine übertragen oder von einem weiteren Sensor wie einem Geschwindigkeitssensor oder einem Inkrementalgeber aufgezeichnet, und die Kontur der Sicherheitsbereiche wird dynamisch an Bewegungs-, Betriebs- oder Positionsdaten angepasst.

Aus der DE 10 2005 003 254 A1 ist ein ortsauflösender Sensor zur Absicherung einer Maschine bekannt, der durch Präsentieren eines optischen Codes im Empfangsbereich umkonfiguriert werden kann. Dabei wird ein dem präsentierten Code entsprechender zuvor eingelernter oder eingespielter Parametersatz verwendet.

In der DE 10 2005 028 490 A1 wird ein Kamerasystem zur Erfassung von Tiefen- oder Stereobildern offenbart, bei dem zusätzlich eine weitere Farb- oder Infrarotkamera auf den Objektbereich gerichtet wird.

Es ist daher Aufgabe der Erfindung, eine Vorrichtung mit dreidimensionalem Bildsensor anzugeben, die für eine einfache Konfiguration der Schutzfelder ausgebildet ist.

Diese Aufgabe wird durch eine Vorrichtung nach Anspruch 1, beziehungsweise ein Verfahren nach Anspruch 14 gelöst. Die erfindungsgemäße Lösung hat den Vorteil, dass die Gefährdungsbereiche auf direkte Weise und sehr schnell eingelernt werden können. Eine umständliche und zeitaufwändige Eingabe und Konfiguration kann daher entfallen. Damit werden Fehler vermieden, die beispielsweise durch falsche Koordinatenursprünge von Sensor relativ zu Gefahrenquelle entstehen und die schrittweise zu korrigieren wären, indem das Schutzfeld zunächst eingegeben und dann dessen Grenze mit einem Prüfstab abgefahren wird, um dessen Grenzen zu korrigieren. Die Lage des Schutzfelds wird der Berechnung durch eine sichere Software überlassen und unterliegt weder der Kenntnis noch möglichen Fehlern eines Bedieners. Fehler beim händischen Einrichten durch Verwendung von Formeln aus einer Betriebsanleitung bei der Berechnung von Sicherheitsabständen und der Zuordnung von der relativen Lage des gewünschten Schutzfeldes zu den Bewegungsabläufen der Maschine können nicht auftreten. Es ist nicht einmal erforderlich, dass das Bedienpersonal eine Fachausbildung besitzt. Mit Hilfe einfacher Parameter wie der Auflösung des Bildsensors oder den zu erwartenden Geschwindigkeiten übernimmt die Vorrichtung sämtliche Berechnungen.

Die Erfindung geht dabei also von dem Prinzip aus, auf möglichst einfache Weise Gefährdungsquellen einzulernen und damit bereits sämtliche erforderlichen Eingaben hinsichtlich der Lage von Schutzfeldern zu erhalten. Die Konfiguration wird dadurch zielorientiert, der Benutzer bezeichnet nur noch die Gefahren, und ist von der Umsetzung des Sicherheitskonzepts entlastet, indem die Schutzzonen automatisch eingerichtet werden.

Vorteilhafterweise ist die Auswertungseinheit dafür ausgebildet, die Informationen von Sensoren, insbesondere Weggebern, Drehgebern, Höhenmessern für die Höhenlagen der Gefahrenquellen und/oder durch manuelle Eingabe, Einspielen einer Datei oder Übergabe von Ansteuerungs- oder Planungseinheiten zu empfangen. Bei Eingabe der Informationen durch die besagten Sensoren kann die Gefahrenquelle, beispielsweise ein Roboter oder ein Fahrzeug, im Konfigurationsmodus der Vorrichtung ihre Bewegungsmuster abfahren und somit die Lokalisierung des Gefahrenbereichs übergeben werden. Ergänzend oder, besonders in einfachen Fällen, alternativ kann die Eingabe auch manuell erfolgen, und zwar sowohl durch unmittelbare Eingabe von Koordinaten auf der Tastatur oder über eine grafische Benutzeroberfläche etwa nach Art eines Zeichen- oder CAD-Programms. Schließlich können die Informationen auch völlig unabhängig von der Vorrichtung erzeugt und fertig vorliegend in die Vorrichtung übertragen werden, beispielsweise in Form einer Datei, die mit einer Maschine mit Gefährdungspotenzial ausgeliefert oder bei ihrer Installation für diese entwickelt wird, oder durch den Empfang über Schnittstellen zu einer Steuerungseinheit für den Bewegungsablauf dieser Maschine.

Bevorzugt ist die Auswertungseinheit dafür ausgebildet, die Informationen mittels optischer Merkmale einzulernen, insbesondere Lichtquellen, Codes oder Barcodes, die an den Gefahrenquellen angebracht sind oder von einer Person, einem Fahrzeug oder einem Roboter entlang der Gefahrenquellen geführt werden. Die Konfiguration erfolgt somit auf eine besonders intuitive Weise, indem das optische Merkmal sichtbar entlang der Gefahrenquelle geführt und dabei von dem Bildsensor aufgenommen wird. Der Benutzer hat so eine einfache Möglichkeit, die Gefahrenquellen zu bezeichnen und unmittelbar während der Eingabe über die direkte Betrachtung des Raumbereichs oder die Betrachtung der Bilder des Sensors eine Rückmeldung zu erhalten.

In Weiterbildung der Erfindung ist die Auswertungseinheit dafür ausgebildet, den Konfigurationsmodus auf einen Befehl hin zu starten und/oder zu beenden, insbesondere durch einen Schlüssel, eine Passworteingabe oder das Aussprechen eines Passworts. Damit ist einerseits abgesichert, dass nur autorisierte Personen in der Lage sind, die Vorrichtung umzukonfigurieren, andererseits können die autorisierten Personen den Konfigurationsmodus auf sehr einfache Weise starten beziehungsweise beenden und auch, wenn sie sich beispielsweise mit einem visuellen Merkmal im Raumbereich bewegen, durch ein akustisches Signal den Konfigurationsmodus immer wieder unterbrechen, etwa um nicht zusammenhängende Teile des Raumbereichs als Schutzbereich konfigurieren zu können.

In einer weiteren Ausnutzung des optischen Merkmals ist die Auswertungseinheit dafür ausgebildet, das optische Merkmal zugleich als den Befehl zu erkennen, insbesondere durch Auslesen des Codes oder Auswerten einer Blinksequenz. So kann also ein spezieller Code beziehungsweise Barcode nicht nur verfolgt werden, um die Gefahrenbereiche zu kennzeichnen, sondern auch gleichzeitig der Auslöser für den Beginn der Konfigurationsphase sein. Ähnliches ist alternativ durch eine bestimmte Blinksequenz erreichbar. Durch die Zusammenfassung der Funktionen optisches Merkmal und Start-oder Stoppbefehl wird also die Bedienung erleichtert.

Vorzugsweise ist die Auswertungseinheit dafür ausgebildet, zur Bestimmung der vorkonfigurierten Schutzfelder zusätzliche Parameter zu berücksichtigen, die insbesondere eingeben werden und Maximalgeschwindigkeiten von Bedienpersonal oder deren Körperteilen, die Auflösung des Bildsensors auf Höhe der Gefahrenquelle und/oder die Ansprechzeit der Vorrichtung sowie die notwendige Zeit zur Absicherung der Gefahrenquelle enthalten. Damit kennt die Auswertungseinheit diejenigen Parameter im speziellen Anwendungsfall der Vorrichtung, welche sie für die sichere und zugleich minimale Auslegung der Schutzfelder benötigt, um-einerseits eine zuverlässige Absicherung zu garantieren, andererseits aber zur Vermeidung unnötiger Ausfallzeiten und unnötigen Rechenaufwands die Schutzfelder möglichst klein zu halten.

In einer bevorzugten Ausführungsform ist die Auswertungseinheit dafür ausgebildet, mehrere Schutzfeldkonfigurationen einzulernen und auf einen Umschaltbefehl, auf Erkennung eines Ereignisses hin oder nach einem Ablaufschema im Betrieb jeweils eine Schutzfeldkonfiguration auszuwählen und anzuwenden. Damit können zum einen standardisierte Anwendungen vorkonfiguriert werden, andererseits kann aber auch in hochkomplexen Anwendungen, in denen ein Roboter beispielsweise verschiedene Arbeitsgänge auszuführen hat, auf die unterschiedlichen Sicherheitsanforderungen in jedem dieser Arbeitsgänge reagiert werden. Dazu muss lediglich zu Beginn oder beim Wechsel des Arbeitsgang die zuvor gespeicherte Schutzfeldkonfiguration aufgerufen und angewandt werden.

Bevorzugt ist die Auswertungseinheit dafür ausgebildet, dynamische Schutzfelder vorzukonfigurieren, deren Ausdehnung zeitabhängig von den Informationen über die Gefahrenquelle ist. Ein einfaches Beispiel hierfür ist eine ein- und ausschaltbare Gefahrenquelle, etwa eine Schweißmaschine, die im ausgeschalteten Zustand keinen oder nur einen geringeren Sicherheitsabstand erfordert. Entsprechend kann das Schutzfeld je nach Schaltzustand groß oder klein gewählt werden. Es sind aber auch kompliziertere dynamische Anwendungen vorstellbar, beispielsweise ein sich bewegender Roboterarm benötigt eine geringere Sicherheitszone entgegen der Bewegungsrichtung als in Bewegungsrichtung.

In bevorzugter Weiterbildung ist eine Warn- und Absicherungseinrichtung vorgesehen, welche auf Detektion der Auswertungseinheit eines unzulässigen Objekteingriffs in ein Schutzfeld eine Warnung ausgeben oder die Gefahrenquelle absichern kann. Dies ist die klassische sicherheitstechnische Anwendung. Ein unzulässiger Objekteingriff kann im einfachsten Fall jeder Eingriff sein, das heißt das Schutzfeld muss frei von allen Objekten sein, damit die Maschine betrieben werden kann. Dies erleichtert erheblich die Auswertung, schränkt aber das Anwendungsfeld ein, weil beispielsweise Fahrzeuge, eine Palette oder ein Roboter die Schutzzone durchaus passieren darf und nur unvorhergesehene Objekteingriffe verhindert werden sollen. In einer anspruchsvolleren Anwendung werden deshalb zulässige Objekteingriffe im Vorfeld eingelernt, und bei Erkennung eines zulässigen Objekteingriffs reagiert die Warn- und Absicherungseinrichtung nicht. Die vorkonfigurierten Schutzfelder bieten hier immer noch den Vorteil, dass außerhalb dieser Schutzfelder keine Auswertung vorgenommen werden muss, weil diese Bereiche nicht sicherheitskritisch sind.

Vorteihafterweise ist der Bildsensor eine Stereokamera, eine Laufzeitkamera oder eine aktiv triangulierende dreidimensionale Kamera. Jedes dieser drei Prinzipien zur Erzeugung dreidimensionaler Bilddaten ist bewährt, und es steht eine große Zahl bekannter Algorithmen zur Erzeugung und Verbesserung der Entfernungsdaten zur Verfügung. Damit ist noch einfacher, die Kamera sicher zu machen.

In einer bevorzugten Ausführungsform ist eine Beleuchtungseinrichtung vorgesehen, welche für die Beleuchtung des Raumbereichs mit einem regelmäßigen oder einem selbstunähnlichen Beleuchtungsmuster ausgebildet ist. Derartige Muster dienen der Kontrasterhöhung im Raumbereich und erhöhen somit die Genauigkeit der Bild- nd Entfernungsdaten. Eine regelmäßige Beleuchtung hat den Vorteil eines einfachen Aufbaus, eine selbstunähnliche Beleuchtung dagegen erlaubt Rückschlüsse aus dem Beleuchtungsmuster auf die Lage im Raum und kann daher zur Verbesserung der Entfernungsdaten eingesetzt werden.

Bevorzugt ist der Sensor und/oder die Auswertungseinheit für einen Selbsttest ausgebildet, bei dem die Aufnahme der dreidimensionalen Bilddaten und/oder die Reaktion auf einen unzulässigen Objekteingriff insbesondere in kurzen Zyklen unterhalb einer geforderten Ansprechzeit überprüft wird. In der Sicherheitstechnik ist erforderlich, dass die Anlage sich ständig selbst überwacht, damit nicht ein Fehler des Geräts zu einer Gefährdung der Gesundheit von Bedienpersonal führt. Dabei ist unter anderem die Funktionsfähigkeit des Bildsensors, aber auch die sichere Ansteuerung für eine Absicherung der Gefahrenquelle regelmäßig zu überprüfen. Dies muss im Betrieb in so kurzen Zeitzyklen geschehen, dass bei Erkennung eines Fehlers durch den Selbsttest die Gefahrenquelle sofort abgesichert werden kann, ohne Bedienpersonal zu gefährden.

In einer bevorzugten Ausführungsform ist die Auswertungseinheit dafür ausgebildet, im Betrieb außerhalb der vorkonfigurierten Schutzfelder keine oder nur eine rechenunintensive Auswertung der Bilddaten vorzunehmen. Die vorhandene Rechenkapazitäten können somit auf die sicherheitsrelevanten Bereiche konzentriert werden, so dass eine genauere Auswertung und/oder eine verringerte Anforderung an die Auslegung der Leistungsfähigkeit der Auswertungseinheit ermöglicht wird.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer ersten Ausführungsform des erfindungsgemäßen Sensors und dessen Überwachungsbereichs mit einem vorkonfigurierten Schutzfeld;
- Fig. 2: eine Draufsicht auf den überwachten Raumbereich und eine mögliche Schutzfeldkonfiguration des Sensors gemäß Figur 1; und
- Fig. 3: ein Ablaufdiagramm des erfindungsgemäßen Verfahrens zur Konfiguration von Schutzfeldern.

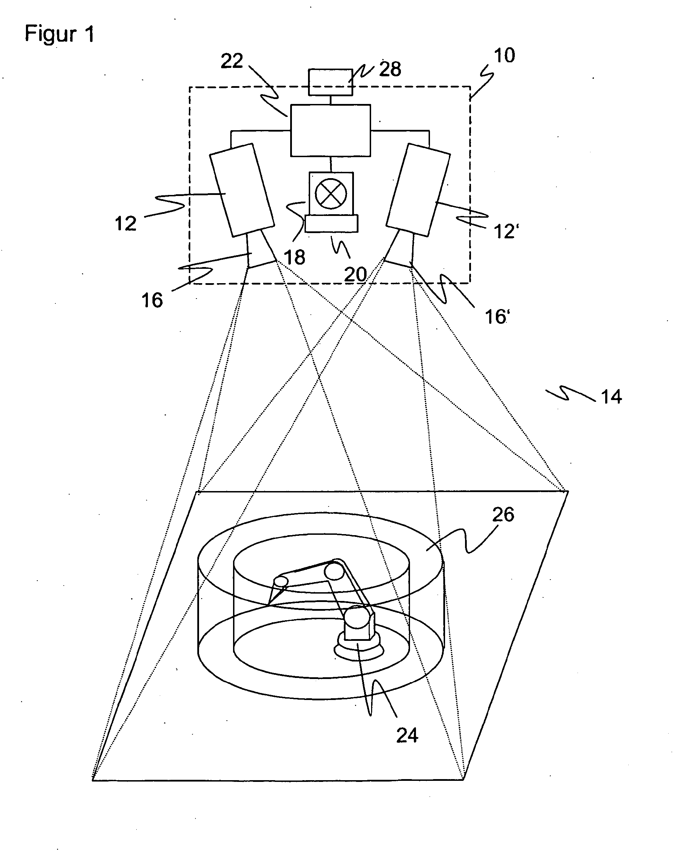

Figur 1 zeigt in einer schematischen dreidimensionalen Darstellung den Aufbau einer Ausführungsform des erfindungsgemäßen Sicherheitssensors 10 auf Basis von einer dreidimensionalen Stereoskopie-Kamera. Zwei Kameramodule 12, 12' sind in einem bekannten festen Abstand zueinander montiert. Beide Kameras 12, 12' nehmen jeweils das Bild eines Überwachungsbereichs 14 auf. Die Kameras 12, 12' weisen ein nur angedeutetes Objektiv 16, 16' mit einer abbildenden Optik auf. Der Sichtwinkel dieser Optik ist in Figur 1 durch gestrichelte Linien dargestellt, die jeweils eine Sichtpyramide bilden, und beträgt erfindungsgemäß beispielsweise 45°. In jeder Kamera 12, 12' ist ein nicht dargestellter Bildsensor vorgesehen. Dieser Bildsensor ist ein matrixförmiger Aufnahmechip, der ein rechteckiges Pixelbild aufnimmt, und kann beispielsweise ein CCD- oder ein CMOS-Sensor sein.

In der Mitte zwischen den beiden Kameras 12, 12' ist eine Beleuchtungsquelle 18 angeordnet. Als Lichtquelle für die Beleuchtungsquelle 18 dient ein Laser mit einer Leistung zwischen 20 und 100 mW. Die Laserleistung kann auch 1 W oder noch mehr betragen, sofern die Schutzklasse dies zulässt und die höheren Kosten in Kauf genommen werden. Alternativ ist auch der Einsatz einer oder mehrerer LEDs vorstellbar.

Der Beleuchtungsquelle 18 ist in der optischen Achse ein diffraktives optisches Element 20 nachgeordnet, um in dem Überwachungsbereich 14 ein Beleuchtungsmuster zu erzeugen. Die Beleuchtungsquelle 18 erzeugt Licht einer vorgegebenen und bekannten Wellenlänge, die im sichtbaren, ultravioletten oder infraroten Bereich liegen kann. Selektiv für diese Wellenlänge lenkt das diffraktive optische Element 20 das von der Beleuchtungsquelle 18 einfallende Licht nur in bestimmte Bereiche des Überwachungsbereichs 14 ab. Das entstehende Beleuchtungsmuster kann ein regelmäßiges, also matrixförmig angeordnetes, Punkt- beziehungsweise Kreismuster sein.

Mit einem anderen diffraktiven optischen Element 20 können auch andere Beleuchtungsmuster erzeugt werden. Dabei ist jedes beliebige Muster erzeugbar, für die Auswertung hilfreich und kontraststark ist neben dem dargestellten Kreismuster ein Linienmuster, ein Schachbrettmuster oder ein Gitter. Prinzipiell kann statt eines diffraktiven optischen Elements 20 auch eine Maske verwendet werden. Dies ist aber weniger vorteilhaft, da ein Teil der eingestreuten Lichtenergie in der Maske verloren geht. Alternativ zu einem regelmäßigen Muster kann ein selbstunähnliches Muster vorgesehen sein, dass also durch geometrische Operationen die Verschiebung, Spiegelung oder Drehung in keinem Bereich auf sich selbst zurückgeführt werden kann. Dann kann aus dem Musterbereich auf die Lage im Raum zurückgeschlossen werden, wohingegen ein regelmäßiges Muster dies wegen Mehrdeutigkeiten nicht zulässt.

Der Laser der Beleuchtungsquelle 18 erzeugt Pulse einer Länge von 1-10 ms. Das Punktmuster im Überwachungsbereich 14, das durch das diffraktive optische Element 20 erzeugt wird, sollte etwa eine Leistung von 0,1 mW je Punkt haben. Je nach Leistung des Lasers sollte daher eine Höchstzahl an Punkten nicht überschritten werden.

Mit den beiden Kameras 12, 12' und der Beleuchtungsquelle 18 ist eine Steuerung 22 verbunden. Die Steuerung 22 schaltet die Lichtpulse der Beleuchtungsquelle 18 und empfängt Bildsignale von den beiden Kameras 12, 12'. Darüber hinaus berechnet die Steuerung 22 mit Hilfe einer stereoskopischen Disparitätsschätzung dreidimensionale Bilddaten des Raumbereichs 14.

Im von dem Sicherheitssensor 10 überwachten Raumbereich 14 befindet sich ein Roboterarm 24, der eine Gefahrenquelle darstellt. Wenn sich der Roboter 24 bewegt, darf sich in seinem Bewegungsradius kein unzulässiges Objekt und insbesondere kein Körperteil von Bedienpersonal befinden. Deshalb ist um den Roboterarm 24 ein virtuelles Schutzfeld 26 gelegt, und die Steuerung 22 wertet die Bilddaten in diesem virtuellen Schutzfeld 26 aus, um unzulässige Objekteingriffe zu erkennen.

Da die Erzeugung von dreidimensionalen Bilddaten mit den heute zur Verfügung stehenden Algorithmen nicht gänzlich fehlerfrei sein kann, liegt das Schutzfeld 26 in einem Teil des Raumbereichs 14, in dem sich keinerlei Objekte befinden. Dadurch fällt es der Auswertungseinheit 22 leichter, einen unzulässigen Objekteingriff zu erkennen, weil jegliche Veränderung des Sichtfelds, die nicht Bildaufnahmetoleranzen oder dergleichen geschuldet ist, unzulässig ist. Die Erfindung umfasst jedoch auch solche Ausführungsformen, bei denen vorab erlaubte Objekteingriffe in das Schutzfeld 26 eingelernt werden und nur eine Abweichung von diesen erlaubten Objekteingriffen als unzulässiger Objekteingriff erkannt wird.

Erkennt die Steuerung 22 einen unzulässigen Eingriff in das Schutzfeld 26, so wird über eine Warn- oder Abschalteinrichtung 28 eine Warnung ausgegeben oder die Gefahrenquelle abgesichert, in dem dargestellten Beispiel also der Roboterarm 24 gestoppt. Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird.

Für Anwendungen in der Sicherheitstechnik ist der Sicherheitssensor 10 fehlersicher ausgelegt. Dies bedeutet unter anderem, dass der Sicherheitssensor 10 sich selber in Zyklen unterhalb der geforderten Ansprechzeit testen kann und dass der Ausgang zur sowie die Warn- und Abschalteinrichtung 28 selbst sicher, beispielsweise zweikanalig ausgelegt ist. Ebenso ist auch die Steuerung 22 selbst sicher, wertet also zweikanalig aus oder verwendet Algorithmen, die sich selbst prüfen können.

Anstelle des dargestellten stereoskopischen Verfahrens umfasst die Erfindung auch weitere dreidimensionale Bildsensoren, etwa eine Laufzeitkamera, die Lichtpulse oder moduliertes Licht aussendet und aus der Lichtlaufzeit auf Entfernungen schließt, oder aktiv triangulierende Kameras, welche Verzerrungen in der Struktur des Beleuchtungsmusters oder die Lage von Teilen des Beleuchtungsmusters im aufgenommenen Bild zur Berechnung von Entfernungsdaten ausnutzen.

Eine weitere Möglichkeit, einen entfernungsauflösenden Lichtempfänger umzusetzen, stellt ein tastendes Lichtgitter dar. Ein solches Lichtgitter besteht aus mehreren zu einer Reihe angeordneten Lichttastern, die einen entfernungsmessenden Lichtempfänger aufweisen, der auf einem Lichtlaufzeitverfahren oder einer Triangulation mittels eines Matrix- oder Zeilenempfängers oder einer ortsauflösenden Diode (PSD, position sensing device) basiert. Ein oder mehrere derartige triangulationsbasierte tastende Lichtgitter bilden also eine Approximation an einen dreidimensionalen Bildsensor, die von der Erfindung mit umfasst ist.

Erfindungsgemäß wird das Schutzfeld 26 von der Auswertungseinheit 22 aus Informationen über die Gefahrenquelle berechnet, hier also über den Roboterarm 24. Dabei ist die Grundidee, Informationen über den Roboterarm 24 einzugeben oder einzulernen und daraus automatisch die erforderlichen Schutzfeldgrenzen 26 zu ermitteln. Dies wird besonders dann vorteilhaft, wenn das Schutzfeld anders als dasjenige Schutzfeld 26 in Figur 1 kompliziert und/oder dynamisch wird.

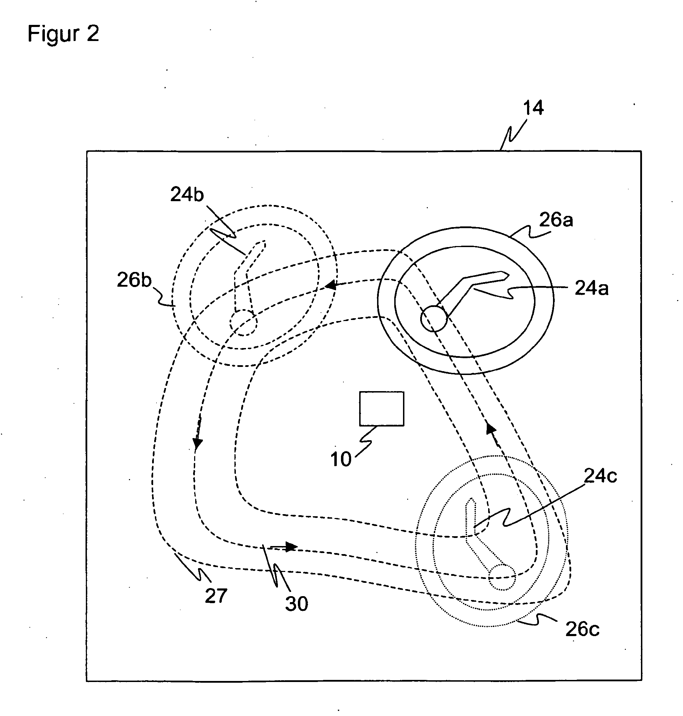

Eine solche Schutzfeldkonfiguration ist in Figur 2 in der Draufsicht des dort nur noch als Kästchen angedeuteten Sicherheitssensors 10 und des von ihm überwachten Raumbereichs 14 dargestellt. Der Roboterarm 24 bewegt sich entlang einer Bewegungsbahn 30 durch den Raumbereich 14. Durch die die Bewegungsbahn 30 umgebenden Linien ist ein Schutzfeld 27 vorgegeben, welches diesen Bewegungsbereich des Roboterarms 24 umgibt. Mit durchgezogenen Linien ist die Position des Roboterarms 24a mit einem Schutzfeld 26a zu einem ersten Zeitpunkt, mit strichpunktierten Linien die Position des Roboterarms 24b mit einem Schutzfeld 26b zu einem zweiten Zeitpunkt und mit gepunkteten Linien die Position des Roboterarms 24c mit einem Schutzfeld 26c zu einem dritten Zeitpunkt dargestellt. Dies entspricht also einem Arbeitsgang, bei dem der Roboter sich von einer ersten auf eine zweite und dann auf eine dritte Position begibt und dort jeweils eine Bewegung ausführt. Die benötigte Schutzfeldkonfiguration wird dabei jeweils umgeschaltet oder dynamisch mitgezogen, damit sie tatsächlich die Gefahrenquelle umgibt und nicht unnötig Bereiche schützt, in denen der Roboter zu diesem Zeitpunkt gar nicht ist. Ein oder mehrere virtuelle Schutzfelder 26 umgeben also statisch oder dynamisch eine Gefahrenquelle und sichern diese damit gegen unzulässige Eingriffe ab.

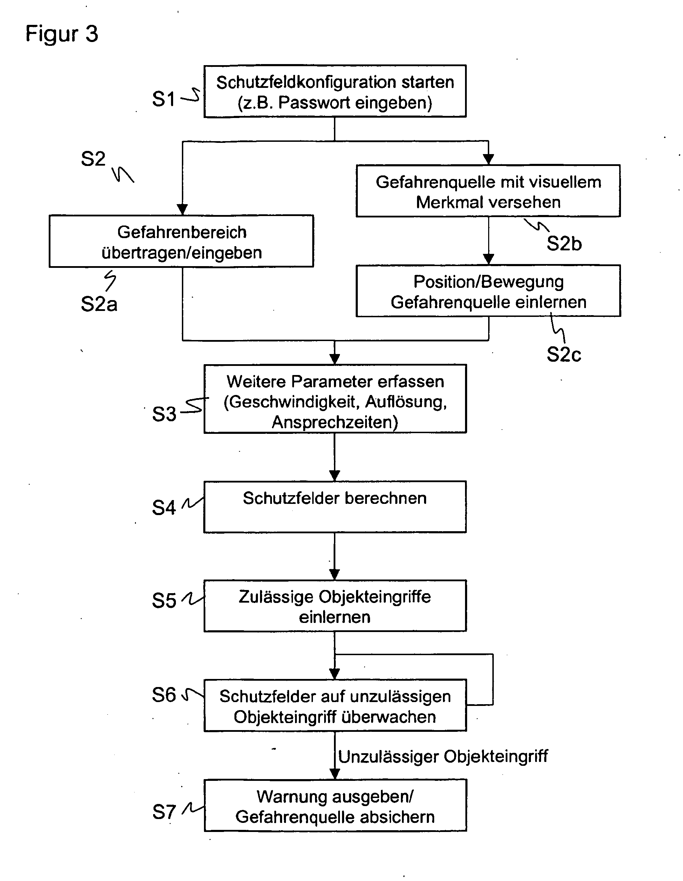

Das erfindungsgemäße Verfahren zur Konfiguration und Überwachung der Schutzfelder 26 wird nachfolgend unter Bezugnahme auf Figur 3 beschrieben. In einem ersten Schritt S1 wird die Schutzfeldkonfiguration gestartet. Dies kann vorzugsweise nur eine autorisierte Person, indem sie einen akustischen Befehl gibt, einen mechanischen Schlüssel verwendet, einen Schalter betätigt, einen RFID-Transponder auslesen lässt oder ein Passwort in die Steuerung 22 eingibt. Damit wird verhindert, dass unberechtigte Personen die Schutzfeldkonfiguration ändern und somit ihre und die Sicherheit anderer gefährden, aber auch eine versehentliche Änderung durch berechtigte Personen.

In einem nachfolgenden Schritt S2 wird zu Beginn des Konfigurationsmodus der Gefahrenbereich eingelernt. Unter Gefahrenbereich ist jener Bereich zu verstehen, wo ein Eingriff unmittelbar die Gesundheit und Unversehrtheit von Körperteilen von Bedienperson beeinträchtigen, zumindest aber Maschinen beschädigen kann. Im Gegensatz dazu ist das virtuelle Schutzfeld 26 eine Art umgebender Kokon, der verhindern soll, dass Objekte den Gefahrenbereich überhaupt erreichen können. Das Schutzfeld 26 muss daher so ausgelegt sein, dass bei den denkbaren Maximalgeschwindigkeiten von Objekteingriffen nach Erkennung des Eingriffs immer noch genug Zeit verbleibt, die Gefahrenquelle abzusichern.

Der Gefahrenbereich kann wie in Schritt S2a händisch über eine Tastatur oder eine grafische Benutzeroberfläche eingegeben werden, aus einer Datei eingespielt werden, aus einer Ansteuerung der Gefahrenquelle übergeben werden, wie beispielsweise der Steuerung des Roboters, oder Sensordaten wiedergeben, welche die Lage des Roboterarms 24 bei seinem Arbeitsgang messen. Als besonders vorteilhaft wird aber erfindungsgemäß angesehen, Informationen über den Gefahrenbereich, also dessen Lage und möglicherweise seine zeitliche Veränderung, in Schritten S2b und S2c mit einem visuellen Merkmal einzulernen. Ein solches visuelles Merkmal kann ein Code, ein Barcode oder eine Lichtquelle sein, die mit einer bestimmten Wellenlänge, einer bestimmten Form oder einer bestimmten Pulsfolge betrieben wird. Der Code kann auf einer Reflexfolie angebracht sein, um die Erkennungsreichweite bei aktiver Beleuchtung 18 des Sensors 10 zu erhöhen.

Dieses visuelle Merkmal kann an der Gefahrenquelle selbst insbesondere an Drehpunkten, gefährlichen oder exponierten Punkten befestigt werden, welche dann zum Einlernen der Konfiguration ihre gewöhnliche Bewegung vollzieht, es kann aber auch von einer Bedienperson durch den Raumbereich 14 bewegt werden, um Gefahrenquellen zu kennzeichnen. Wenn das Passwort zum Starten und Beenden des Konfigurationsmodus ein akustisches ist, kann die Bedienperson sich durch den Raumbereich 14 bewegen und durch Aussprechen des Passworts den Konfigurationsmodus starten und unterbrechen, um an unterschiedlichen Stellen Gefahrenquellen zu kennzeichnen. In unzugänglichen Bereichen oder zur weiteren Automatisierung kann das visuelle Merkmal auch von einem Roboter oder einem Fahrzeug getragen werden, welches die Bewegungsbahn einer Gefahrenquelle abfährt.

Das visuelle Merkmal kann auch selber der Auslöser für den Start oder eine Unterbrechung beziehungsweise das Ende des Konfigurationsmodus sein, in dem ein spezieller Code oder eine Blinksequenz der Lichtquelle erkannt wird. Eine solche Blinksequenz kann durch Abdecken der Lichtquelle mit der Hand oder eine elektronische Ansteuerung erzeugt werden. Weiterhin ist möglich, zusätzlich zum Einlernen mit einem visuellen Merkmal Gefahrenbereiche gemäß Schritt S2a zu ergänzen oder zu überarbeiten.

Nachdem somit die Gefahrenbereiche in der Steuerung 22 bekannt sind, können in einem Schritt S3 weitere Parameter eingegeben oder erfasst werden, etwa die maximale Geschwindigkeit eines Objekteingriffs, die Auflösung des Bildsensors 12, 12' in Höhe der Gefahrenbereiche, die Ansprechzeit des Bildsensors 12, 12' oder diejenige der Warn- oder Ausschalteinrichtung 28. Dies sind Parameter, die in die Auslegung der Schutzfeldgrenzen 26 einfließen.

Aus der Lage und dem dynamischen Verhalten der Gefahrenbereiche sowie gegebenenfalls aus den eingegebenen Parametern, sonst aus angenommenen oder vorgegebenen Parametern, berechnet die Steuerung 22 in einem weiteren Schritt S4 die Schutzfelder 26. Diese Schutzfelder 26 sind so klein wie möglich zu wählen, um Fehlalarme auszuschließen und um die auszuwertenden Bereiche im Betrieb möglichst klein zu halten. Denn außerhalb der Schutzfelder 26 muss der Sicherheitssensor 10 die aufgenommenen Bilddaten nicht auswerten, jedenfalls nicht für Sicherheitsaufgaben, oder nur sporadisch, um weitere Gefahrenquellen zu erkennen, die nicht eingelernt wurden. Insbesondere kann bei einer beweglichen Gefahrenquelle das Schutzfeld 26 in Bewegungsrichtung größer und quasi im Windschatten der Bewegung kleiner gewählt werden, da die Kollisionsgeschwindigkeit und damit die zur Verfügung stehende Ansprechzeit bis zur Absicherung von der Eigenbewegung der Gefahrenquelle abhängig ist. Neben der Bewegung können auch weitere Zustände der Gefahrenquelle eine Rolle spielen, etwa die Temperatur oder ob die Gefahrenquelle im Betrieb ist. Ein rasch rotierendes Messer benötigt einen wesentlich größeren Schutzbereich als ein stillstehendes oder ein langsam bewegtes Messer.

Sofern hinreichend mächtige Auswertungen für den Betrieb zur Verfügung stehen, können in einem weiteren Schritt S5 zulässige Objekteingriffe in einen Schutzbereich 26 eingelernt werden, also etwa vorgesehene Bewegungen des Roboterarms 24 oder das Durchfahren einer Palette.

Damit ist die Konfiguration der Schutzfelder 26 abgeschlossen, was durch erneute Eingabe eines Passwortes oder einen sonstigen Befehl bestätigt werden kann.

Im eigentlichen Betriebszyklus S6 überwacht dann die Steuerung 22 den Raumbereich 14 durch Auswerten der dreidimensionalen Bilddaten des Bildsensors 12, 12'. Bei einem unzulässigen Objekteingriff wird in einem Schritt S7 über die Warn- oder Abstandeinrichtung 28 eine Warnung ausgegeben oder die Gefahrenquelle abgesichert. Ansonsten beginnt in vorzugsweise kurzen Zeitabständen mit Frequenzen von einigen 10 Hz der nächste Zyklus S6, wobei mit ebenfalls vorzugsweise kurzen Testzyklen überprüft wird, ob der Sensor 10 noch funktionsfähig ist. Dieser Betriebsmodus der Schritte S6 und S7 wurde auch oben im Zusammenhang mit den Figuren 1 und 2 beschrieben.

## Patentansprüche

1. Optoelektronische Vorrichtung (10) zur Absicherung einer oder mehrerer Gefahrenquellen in einem Raumbereich (14) mit mindestens einem Lichtempfänger (12), insbesondere einem dreidimensionalen Bildsensor, welcher entfernungsaufgelöste Bilddaten des Raumbereichs (14) erzeugen kann, sowie mit einer Auswertungseinheit (22), die für die Auswertung der Bilddaten zur Detektion von Objekten nur in einem oder mehreren vorkonfigurierten Schutzfeldern (26) innerhalb des Raumbereichs (14) ausgebildet ist,
**dadurch gekennzeichnet,**
**dass** die Auswertungseinheit (22) für einen Konfigurationsmodus zum Bestimmen der vorkonfigurierten Schutzfelder (26) ausgebildet ist, in dem Informationen über die Gefahrenquelle (24) vorgegeben werden, die Positionen, Bewegungsabläufe und/oder Zustände der Gefahrenquellen (24) enthalten, und die Auswertungseinheit (22) aus diesen Informationen über die Gefahrenquellen (24) die vorkonfigurierten Schutzfelder (26) bestimmen kann, wobei die Auswertungseinheit (22) dafür ausgebildet ist, die Informationen mittels optischer Merkmale einzulernen.

2. Vorrichtung (10) nach Anspruch 1,
wobei die Auswertungseinheit (22) dafür ausgebildet ist, die Informationen von
Sensoren, insbesondere Weggebern, Drehgebern, Höhenmessern für die Höhenlagen der Gefahrenquellen (24) und/oder durch manuelle Eingabe, Einspielen einer Datei oder Übergabe von Ansteuerungs- oder Planungseinheiten zu empfangen.

3. Vorrichtung (10) nach Anspruch 1 oder 2,
wobei die Auswertungseinheit (22) dafür ausgebildet ist, die Informationen mittels Lichtquellen, Codes oder Barcodes einzulernen, die an den Gefahrenquellen angebracht sind oder von einer Person, einem Fahrzeug oder einem Roboter entlang der Gefahrenquellen geführt werden.

4. Vorrichtung (10) nach einem der vorhergehenden Ansprüche,
wobei die Auswertungseinheit (22) dafür ausgebildet ist, den Konfigurationsmodus auf einen Befehl hin zu starten und/oder zu beenden, insbesondere durch einen Schlüssel, eine Passworteingabe oder das Aussprechen eines Passworts.

5. Vorrichtung (10) nach Anspruch 3 und 4,
wobei die Auswertungseinheit (22) dafür ausgebildet ist, das optische Merkmal zugleich als den Befehl zu erkennen, insbesondere durch Auslesen des Codes oder Auswerten einer Blinksequenz.

6. Vorrichtung (10) nach einem der vorhergehenden Ansprüche,
wobei die Auswertungseinheit (22) dafür ausgebildet ist, zur Bestimmung der vorkonfigurierten Schutzfelder (26) zusätzliche Parameter zu berücksichtigen, die insbesondere eingegeben werden und Maximalgeschwindigkeiten von Bedienpersonal oder deren Körperteilen, die Auflösung des Bildsensors (12) auf Höhe der Gefahrenquellen (24) und/oder die Ansprechzeit der Vorrichtung (10) sowie zur Absicherung der Gefahrenquellen (24) enthalten.

7. Vorrichtung (10) nach einem der vorhergehenden Ansprüche,
wobei die Auswertungseinheit (22) dafür ausgebildet ist, mehrere Schutzfeldkonfigurationen (26) zu bestimmen und auf einen Umschaltbefehl, auf Erkennung eines Ereignisses hin oder nach einem Ablaufschema im Betrieb jeweils eine Schutzfeldkonfiguration (26) auszuwählen und anzuwenden.

8. Vorrichtung (10) nach einem der vorhergehenden Ansprüche,
wobei die Auswertungseinheit (22) dafür ausgebildet ist, dynamische Schutzfelder (26a-26c; 27) vorzukonfigurieren, deren Ausdehnung zeitabhängig von den Informationen über die Gefahrenquellen (24) ist.

9. Vorrichtung (10) nach einem der vorhergehenden Ansprüche,
wobei eine Warn- und Absicherungseinrichtung (28) vorgesehen ist, welche auf Detektion der Auswertungseinheit (22) eines unzulässigen Objekteingriffs in ein Schutzfeld (26) eine Warnung ausgeben oder die Gefahrenquelle (24) absichern kann.

10. Vorrichtung (10) nach einem der vorhergehenden Ansprüche,
wobei der Bildsensor eine Stereokamera (12, 12'), eine Laufzeitkamera oder eine aktiv triangulierende dreidimensionale Kamera ist.

11. Vorrichtung (10) nach einem der vorhergehenden Ansprüche,
wobei eine Beleuchtungseinrichtung (18) vorgesehen ist, welche für die Beleuchtung des Raumbereichs (14) mit einem regelmäßigen oder einem selbstunähnlichen Beleuchtungsmuster ausgebildet ist.

12. Vorrichtung (10) nach einem der vorhergehenden Ansprüche,
wobei die Vorrichtung (10) und/oder die Auswertungseinheit (22) für einen Selbsttest ausgebildet ist, bei dem die Aufnahme der Bilddaten und/oder die Reaktion auf einen unzulässigen Objekteingriff insbesondere in kurzen Zyklen unterhalb einer geforderten Ansprechzeit überprüft wird.

13. Vorrichtung (10) nach einem der vorhergehenden Ansprüche,
wobei die Auswertungseinheit (22) dafür ausgebildet ist, im Betrieb außerhalb der vorkonfigurierten Schutzfelder (26) keine oder nur eine rechenunintensive Auswertung der Bilddaten vorzunehmen.

14. Verfahren zur Absicherung einer oder mehrerer Gefahrenquellen (24) in einem Raumbereich (14), bei dem entfernungsaufgelöste Bilddaten des Raumbereichs (14) erzeugt und zur Detektion von Objekten nur in einem oder mehreren vorkonfigurierten Schutzfeldern (26) innerhalb des Raumbereichs (14) ausgewertet werden,
**dadurch gekennzeichnet,**
**dass** in einem Konfigurationsmodus die vorkonfigurierten Schutzfelder (26) bestimmt werden, in dem Informationen über die Gefahrenquelle (24) vorgegeben werden, die Positionen, Bewegungsabläufe und/oder Zustände der Gefahrenquellen (24) enthalten, und aus diesen Informationen über die Gefahrenquellen (24) die vorkonfigurierten Schutzfelder (26) bestimmt werden, wobei die Informationen mittels optischer Merkmale eingelernt werden.

15. Verfahren nach Anspruch 14,
wobei die Informationen mittels optischer Merkmale eingelernt werden, indem Lichtquellen, Codes oder Barcodes an den Gefahrenquellen (24) angebracht und deren Position oder Bewegung aufgezeichnet wird oder indem die optischen Merkmale von einer Person, einem Fahrzeug oder einem Roboter entlang der Gefahrenquellen (24) geführt werden.

16. Verfahren nach Anspruch 14 oder 15,
wobei auf Detektion eines unzulässigen Objekteingriffs in ein Schutzfeld (26) eine Warnung ausgegeben oder die Gefahrenquelle (24) abgesichert wird.

17. Verfahren nach einem Ansprüche 14 bis 16,
wobei ein Selbsttest durchgeführt wird, bei dem die Aufnahme der Bilddaten und/oder die Reaktion auf einen unzulässigen Objekteingriff insbesondere in kurzen Zyklen unterhalb einer geforderten Ansprechzeit überprüft wird.

## Claims

1. An optoelectronic apparatus (10) for the securing of one or more sources of danger in a spatial zone (14) having at least one light receiver (12), in particular a three-dimensional image sensor, which can generate distance-resolved image data of the spatial zone (14), as well as having an evaluation unit (22) which is designed for the evaluation of the image data for the detection of objects only in one or more preconfigured protected fields (26) within the spatial zone (14),
**characterised in that**
the evaluation unit (22) is designed for a configuration mode for the determination of the preconfigured protected fields (26), in which configuration mode information is predetermined on the sources of danger which contains positions, movement sequences and/or states of the sources of danger (24); and **in that** the evaluation unit (22) can determine the preconfigured protected fields (26) from this information on the danger sources (24), with the evaluation unit (22) being designed to learn the information by means of optical features.

2. An apparatus (10) in accordance with claim 1, wherein the evaluation unit (22) is designed to receive the information from sensors, in particular position encoders, rotary encoders, altimeters for the height positions of the sources of danger (24) and/or by manual input, importing a file or transmission from control units or planning units.

3. An apparatus (10) in accordance with claim 1 or 2, wherein the evaluation unit (22) is designed to learn the information by means of light sources, codes or bar codes which are attached to the sources of danger or are guided along the sources of danger by a person, a vehicle or a robot.

4. An apparatus (10) in accordance with any one of the preceding claims, wherein the evaluation unit (22) is designed to start and/or to end the configuration mode in response to a command, in particular by a key, a password input or by the speaking of a password.

5. An apparatus (10) in accordance with claim 3 and claim 4, wherein the evaluation unit (22) is designed to recognize the optical features as the command at the same time, in particular by reading the code or evaluating a flashing sequence.

6. An apparatus (10) in accordance with any one of the preceding claims, wherein the evaluation unit (22) is designed to take account of additional parameters for the determination of the preconfigured protected fields (26), said additional parameters in particular being input and containing maximum speeds of operators or of their body parts, the resolution of the image sensor (12) at the level of the sources of danger (24) and/or the response time of the apparatus (10), as well as to secure the sources of danger (24).

7. An apparatus (10) in accordance with any one of the preceding claims, wherein the evaluation unit (22) is designed to determine a plurality of protected field configurations (26) and to select and use a respective protected field configuration (26) in response to a switchover command, to a recognition of an event or in accordance with a flow chart in operation.

8. An apparatus (10) in accordance with any one of the preceding claims, wherein the evaluation unit (22) is designed to preconfigure dynamic protected fields (26a-26c; 27) whose extent is time-dependent on the information on the sources of danger (24).

9. An apparatus (10) in accordance with any one of the preceding claims, wherein a warning and securing device (28) is provided which can output a warning or secure the source of danger (24) on detection by the evaluation unit (22) of an unauthorised object intrusion into a protected field (26).

10. An apparatus (10) in accordance with any one of the preceding claims, wherein the image sensor is a stereo camera (12, 12'), a time of flight camera or an actively triangulating three-dimensional camera.

11. An apparatus (10) in accordance with any one of the preceding claims, wherein an illumination device (18) is provided which is designed for the illumination of the spatial zone (14) with a regular or an irregular illumination pattern.

12. An apparatus (10) in accordance with any one of the preceding claims, wherein the apparatus (10) and/or the evaluation unit (22) is designed for a self-test in which the taking of the image data and/or the reaction to an unauthorised object intrusion is in particular checked at short cycles within a required response time.

13. An apparatus (10) in accordance with any one of the preceding claims, wherein the evaluation unit (22) is designed not to carry out an evaluation of the image data or only to carry out a calculation-non intensive evaluation of the image data in operation outside the preconfigured protected fields (26).

14. A method for the securing of one or more sources of danger (24) in a spatial zone (14) in which distance-resolved image data of the spatial zone (14) are generated and are evaluated for the detection of objects only in one or more preconfigured protected fields (26) within the spatial zone (14),
**characterised in that**
the preconfigured protected fields (26) are determined in a configuration mode in which information on the danger source (24) is predetermined which contains positions, movement sequences and/or states of the sources of danger (24) and the preconfigured protected fields (26) are determined from this information on the danger sources (24), with the information being learned by means of optical features.

15. A method in accordance with claim 14, wherein the information is learned by means of optical features in that light sources, codes or bar codes are attached to the sources of danger (24) and their position or movement is recorded or in that the optical features are guided along the sources of danger (24) by a person, a vehicle or a robot.

16. A method in accordance with claim 14 or claim 15, wherein a warning is output or the source of danger (24) is secured on detection of an unauthorised object intrusion.

17. A method in accordance with any one of the claims 14 to 16, wherein a self-test is carried out in which the taking of the image data and/or the reaction to an unauthorised object intrusion is in particular checked in short cycles below a required response time.

## Revendications

1. Dispositif optoélectronique (10) destiné à sécuriser une ou plusieurs sources de danger dans une partie de local (14), avec au moins un récepteur lumineux (12), en particulier un capteur d'images tridimensionnelles qui peut produire des données d'images de la partie de local (14) avec résolution de la distance, et avec une unité d'analyse (22) qui est conçue pour analyser les données d'images afin d'y détecter des objets uniquement dans une ou plusieurs zones de protection (26) préconfigurées à l'intérieur de la partie de local (14),
**caractérisé en ce que**
l'unité d'analyse (22) est conçue pour un mode de configuration, destiné à déterminer les zones de protection (26) préconfigurées, dans lequel sont saisies sur les sources de danger (24) des informations qui contiennent des positions, des séquences de mouvements et/ou des états des sources de danger (24), et l'unité d'analyse (22) peut déterminer les zones de protection (26) préconfigurées à partir de ces informations sur les sources de danger (24), dans lequel l'unité d'analyse (22) est conçue pour apprendre les informations à l'aide de repères optiques.

2. Dispositif (10) selon la revendication 1, dans lequel l'unité d'analyse (22) est conçue pour recevoir les informations en provenance de capteurs, en particulier de capteurs de déplacement, de capteurs de rotation, de capteurs de hauteur pour les positions en hauteur des sources de danger (24), et/ou par saisie manuelle, par transfert d'un fichier ou par transfert en provenance d'unités de commande ou d'étude.

3. Dispositif (10) selon la revendication 1 ou 2, dans lequel l'unité d'analyse (22) est conçue pour apprendre les informations à partir de sources lumineuses, de codes ou de codes à barres qui sont placés sur les sources de danger ou qui sont déplacées le long des sources de danger par une personne, un véhicule ou un robot.

4. Dispositif (10) selon l'une des revendications précédentes, dans lequel l'unité d'analyse (22) est conçue pour débuter et/ou terminer le mode de configuration sur une instruction, en particulier par l'action d'une clef, la saisie d'un mot de passe ou la prononciation d'un mot de passe.

5. Dispositif (10) selon les revendications 3 et 4, dans lequel l'unité d'analyse (22) est conçue pour identifier le repère optique comme une instruction, en particulier par la lecture du code ou par l'analyse d'une séquence de clignotements.

6. Dispositif (10) selon l'une des revendications précédentes, dans lequel l'unité d'analyse (22) est conçue pour prendre en compte, en vue de déterminer des zones de protection (26) préconfigurées ainsi qu'en vue de sécuriser les sources de danger (24), des paramètres supplémentaires, qui sont en particulier saisis et qui contiennent des vitesses maximales du personnel de service ou des parties du corps, la résolution du capteur d'images (12) à hauteur des sources de danger (24) et/ou le délai de réponse du dispositif (10).

7. Dispositif (10) selon l'une des revendications précédentes, dans lequel l'unité d'analyse (22) est conçue pour déterminer plusieurs configurations de zones de protection (26) et, sur une instruction de commutation, sur une détection d'un événement ou en fonction d'un schéma de séquence en service, pour sélectionner et appliquer à chaque fois une configuration de zones de protection (26).

8. Dispositif (10) selon l'une des revendications précédentes, dans lequel l'unité d'analyse (22) est conçue pour préconfigurer des zones de protection dynamiques (26a à 26c ; 27) dont l'extension dépend, dans le temps, des informations sur les sources de danger (24).

9. Dispositif (10) selon l'une des revendications précédentes, dans lequel il est prévu un dispositif d'avertissement et de sécurisation (28) qui, sur détection par l'unité d'analyse (22) de l'entrée inadmissible d'un objet dans une zone de protection (26), peut émettre un avertissement ou sécuriser la source de danger (24).

10. Dispositif (10) selon l'une des revendications précédentes, dans lequel le capteur d'images est une caméra stéréo (12, 12'), une caméra à durée de parcours ou une caméra tridimensionnelle à triangulation active.

11. Dispositif (10) selon l'une des revendications précédentes, dans lequel il est prévu un dispositif d'éclairage (18) qui est conçu pour l'éclairage de la partie de local (14) à l'aide d'un motif lumineux régulier ou non autosimilaire.

12. Dispositif (10) selon l'une des revendications précédentes, lequel dispositif (10) et/ou l'unité d'analyse (22) est conçu pour un autotest au cours duquel est contrôlée la capture des données d'images et/ou la réaction à l'entrée inadmissible d'un objet, en particulier sous la forme de brefs cycles inférieurs au délai de réponse exigé.

13. Dispositif (10) selon l'une des revendications précédentes, dans lequel l'unité d'analyse (22) est conçue pour n'effectuer en service aucune analyse des données d'images ou seulement une analyse peu exigeante en calculs, en dehors des zones de protection (26) préconfigurées.

14. Procédé destiné à sécuriser une ou plusieurs sources de danger (24) dans une partie de local (14), dans lequel des données d'images de la partie de local (14) avec résolution de la distance sont produites et analysées afin de détecter des objets uniquement dans une ou plusieurs zones de protection (26) préconfigurées à l'intérieur de la partie de local (14),
**caractérisé en ce que**
les zones de protection (26) préconfigurées sont déterminées dans un mode de configuration, dans lequel sont saisies sur les sources de danger (24) des informations qui contiennent des positions, des séquences de mouvements et/ou des états des sources de danger (24), et les zones de protection (26) préconfigurées sont déterminées à partir de ces informations sur les sources de danger (24), dans lequel les informations sont apprises à l'aide de repères optiques.

15. Procédé selon la revendication 14, dans lequel les informations sont apprises à l'aide de repères optiques, en ce sens que des sources lumineuses, des codes ou des codes à barres sont apposés sur les sources de danger (24) et leur position ou leur déplacement est enregistré ou en ce sens que les repères optiques sont déplacés le long des sources de danger (24) par une personne, un véhicule ou un robot.

16. Procédé selon la revendication 14 ou 15, dans lequel, lors de la détection de la pénétration inadmissible d'un objet dans une zone de protection (26), un avertissement est produit ou la source de danger (24) est sécurisée.

17. Procédé selon l'une des revendications 14 à 16, dans lequel un autotest est réalisé, dans lequel sont contrôlés la capture des données d'images et/ou la réaction à la pénétration inadmissible d'un objet, en particulier sous la forme de brefs cycles inférieurs au délai de réponse exigé.
